# EUROPEAN PATENT APPLICATION

(11) **EP 4 481 514 A1**
(43) Date of publication of application: **25.12.2024**
(21) Application number: 24182393.9
(22) Date of filing: 14.06.2024
(51) Int. Cl.: G05B 17/00, G06F 30/27, G06N 3/047, G06N 7/01

(54) **METHODS AND SYSTEMS FOR MODEL CALIBRATION**

(30) Priority: 22.06.2023 US 202318212936
(71) Applicant: General Electric Company, Cincinnati, Ohio 45215-6301 (US)
(72) Inventor: PANDITA, Piyush, Niskayuna, 12309 (US); CURRAN, John, Evendale, 45215 (US); GHOSH, Sayan, Niskayuna, 12309 (US); WANG, Liping, Niskayuna, 12309 (US)
(74) Representative: Openshaw & Co.

(57) **Abstract**

Methods and systems for calibrating a model (112, 144) are provided herein. In some embodiments, the methods include receiving, via a control circuit, test data for an operational parameter of a real-world system (102, 142), such as an engine, from operational tests. The control circuit also receives model data for the operational parameter from simulations performed via a model (112, 144) of the engine. The control circuit then compresses the test data and the model (112, 144) data to generate compressed test data and compressed model data and fusing the compressed test data with the compressed model data to generate fused data. The control circuit performs parallel Bayesian inference simulations using the fused data to identify at least one value for a tuning parameter of the model (112, 144). The control circuit may identify and select tuning parameters to match the model (112, 144) data with test data, the model (112, 144) data may be one or more model (112, 144) outputs (i.e., output parameters).

## Description

### Technical Field

These teachings relate generally to models and more particularly to models, such as models, of engine or cycle performance.

### Background

Mathematical models, such as models of engine or cycle performance, utilize mathematics or physics to describe a real-world system. A model may serve as a mapping function from an input parameter (x) to an output parameter (y) and may be modulated by tuning parameters (θ). The tuning parameters (θ) may be real-valued scalars that are not directly predicted or estimated by the model but define the model architecture. To improve the prediction of the output parameters (y) from the model, the model may be calibrated to align the output parameters (y) with observed or test data from a real-world system. Such calibration may involve adjusting or tuning the tuning parameters (θ) in the model, which can take multiple values, to ensure the model provides an accurate description of the behavior of the real-world system. Calibration may be achieved by confronting predictions from the model with actual observations or measurements performed on the real-world system. In order to align the predictions with the test data from the real-world systems, the values of one or more tuning parameters (θ) may be adjusted.

### Brief Description of the Drawings

Various needs are at least partially met through provision of the methods and systems for model calibration described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a system for calibrating a model in accordance with various embodiments of these teachings;
FIG. 2 comprises a schematic diagram of a tuning process for a model in accordance with various embodiments of these teachings;
FIGS. 3A and 3B comprise a flow diagram of a method of calibrating a model in accordance with various embodiments of these teachings;
FIG. 4 comprises a schematic diagram of a data compression process in accordance with various embodiments of these teachings;
FIG. 5 comprises a graph of an exemplary parallelizable Markov Chain Monte Carlo (MCMC) process in accordance with various embodiments of these teachings;
FIG. 6 comprises another graph of an exemplary parallelizable Markov Chain Monte Carlo (MCMC) process in accordance with various embodiments of these teachings;
FIG. 7 comprises exemplary probability distributions of tuning parameters for a model derived in accordance with various embodiments of these teachings;
FIGS. 8A, 8B, and 8C are a flow diagram of a method of prognostics health monitoring and health management/engine health monitoring (PHM/EHM) for an engine where a PHM/EHM model is tuned using the methods described herein;
FIG. 9 is a graph of exemplary flight data used in the method of FIGS. 8A-8C; and
FIG. 10 is a flow diagram of an exemplary method of certifying an engine by analysis using a calibrated model that has been calibrated via the methods described herein.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### Detailed Description

Model calibration is generally performed by adjusting tuning of the tuning parameters (θ), for example, to reduce error in model predictions (e.g., with reference to field data and/or test data). In some approaches, tuning is accomplished via trial-and-error. Trial-and-error based tuning involves manually adjusting the tuning parameters (θ) via a human-in-loop approach to drive one or more output parameters (y) from the model towards the test data from a real-world system. In some approaches, a design of experiments is run on the real-world system to obtain observed or test data. The tuning parameters (θ) are then manually set to particular trial values and simulations or analysis are run using the model to generate trial output parameters (y) from the model. The trial output parameters (y) are then compared to the test data from the real-world system to check for the alignment and error between the trial output parameters (y) and the test data. Trials are performed, adjusting one or more tuning parameters (θ) with each trial until the model is sufficiently calibrated. That is, until alignment is achieved between the model output parameters (y) and the test data from the real-world system and/or the error between the model output parameters (y) and the test data is reduced to an acceptable level.

Trial-and-error based tuning is time consuming and, in some instances, can take several months. For example, the model output parameters (y) from the trials and the test data from the real-world system may be in the form of large temporal data sets that have high-dimensionality. In addition to the size, the test data sets may include noise, bias, or measurement error which makes tuning the model data difficult. Further, model data may include a simplification of physics used to capture the real-world system so not all real-world effects may be modeled. In addition, a large number of trials may need to be performed to achieve a sufficiently tuned model. Multiple outputs parameters (y) for the model may also have to be calibrated together and there may be multiple potential solutions for the tuning parameters (θ), further complicating the analysis. Further, the automation of trial-and-error based tuning involves large computation efforts, which may be prohibitive. Human capacity to evaluate model data versus test data is limited. Automating calibration via a human-in-the-loop approach may be too computationally time consuming and may not handle imperfections in the test data and the model data. These are all significant challenges in the context of application settings.

Generally speaking, the various aspects of the present disclosure can be employed to reduce the time and computational efforts involved with model calibration. The methods and systems for calibrating a model described herein use data compression to reduce the scale of the large temporal data sets (*i.e.*, data sets from the model and the real-world system) and fuse the reduced data sets together using Bayesian data fusion techniques. Further, the methods and systems use parallel Markov Chain Monte Carlo (MCMC) algorithms to identify a family of potential values for tuning parameters (θ). For example, the family of potential values may be in the form of a probability distribution for the tuning parameter (θ).

The methods and system for model calibration described herein may be used to select or generate values for tuning parameters (θ) for a model that optimize or otherwise improve one or more output parameters of a model using parallel Bayesian inference techniques. Optimization may involve minimizing or reducing the error between test data that reflects observed values in a real-world system and model data that reflects predicted values generated via a model. For example, the tuning parameters may reduce the error between the test data and the model data for multiple output parameters (y) of the model. The use of Bayesian inference techniques in combination with data compression algorithms reduces the computational effort involved with aligning model data and test data during calibration. In addition, the computational efficiency enables the methods and systems described herein to generate values for one or more tuning parameters (θ) together to generate a family of tuning parameters for the model. Thus, a plurality of tuning parameters may be selected together to reduce error between model data and test data rather than selecting values for each tuning parameter (θ) individually.

It is contemplated that the models referred to herein may be any type of model such as a physics-based models, numerical models, or chemically-based model. Other nonlimiting examples of model types include component level models (CLM), piecewise linear models (PLM), computational fluid dynamics (CFD) models, heat transfer models, financial models, or finite element analysis models. Further, the models may be simple (i.e., simplified) models or complex models.

In some approaches, the methods and systems for calibrating a model described herein may be used to calibrate a model of an engine, such as a gas turbine engine which may be used in aviation settings. Because engine models involve dense timeseries data, calibrating engine models may be computationally expensive and, the approaches described herein may be employed to calibrate the engine models in a manner that is computationally efficient. However, it is contemplated that, in other approaches, models of other real-world systems may be calibrated using these methods and systems.

It is also contemplated that the methods and system for model calibration described herein may be applied to models that involve any type of transient data (e.g., in addition to time-series data). For example, the model data and test data may be discretized in by any other suitable variables such as flight points, engine cycles, or otherwise instead of being discretized by time. Thus, in yet other approaches, the methods and systems described herein may be used to calibrate models for Prognostics Health Management (PHM) and/or Engine Health Management (EHM). Such PHM and/or EHM models may include data that is discretized by flight points that when chronologically ordered constitute a date/time axis. It is also to be understood that the model data and the test data referred to herein may be discretized in equal (or approximately equal) increments or may be discretized in unequal increments.

Though the systems and methods described herein refer to calibrating model data to test data from a real-world system, it is also contemplated that the systems and methods may calibrate the model data to any other type of data with and for any objective. For example, the test data or target data to which the model data is calibrated does not need to come from a real-world system but could be any target. In one non-limiting example, the target data could be output from other models, software programs, or systems.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

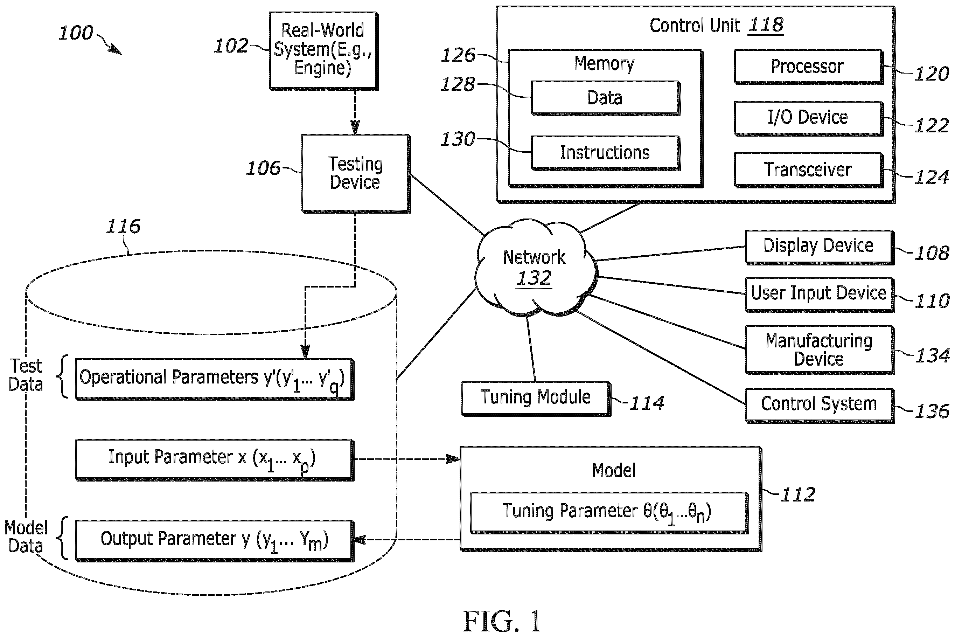

The foregoing and other benefits may become clearer upon making a thorough review and study of the following detailed description. Referring now to the drawings, and in particular to FIG. 1, a system 100 that is compatible with many of these teachings will now be presented. The system 100 may be employed to calibrate a model. In particular, the system 100 may be employed to generate or determine one or more possible values for the tuning parameters (θ) for a model. Examples of tuning parameters for an engine or cycle performance model include but are not limited to compressor efficiency, turbine flow, and heat transfer coefficients.

The system 100 includes a testing device 106, a display device 108, a user input device 110, a model 112, a tuning module 114, one or more databases 116, and a control unit 118.

The testing device 106 is configured to perform operational tests on a real-world system 102. In some embodiments, the real-world system is an engine, such as a gas turbine engine, or portions thereof. It is contemplated that the testing device 106 may perform on-wing and/or off-wing engine testing. The testing device 106 may include one or more cameras, probes, and/or sensors that measure, detect, and/or otherwise determine operational parameters (y') of the real-world system 102. Sensors employed by the testing device 106 may be temperature sensors, pressure sensors, flow sensor, speed sensors, airflow sensors, mass flow sensors, vibration sensors, level sensors, or similar. Examples of operational parameters (y') that may be measured by the testing device 106 include, but are not limited to, temperatures, pressures, vibration levels, rotor speeds, oil levels, fuel flow rates, fuel levels, oil filter differential pressure, fuel filter differential pressures, oil filter differential pressure, or similar. When the real-world system 102 is an engine for an aircraft, operational parameters (y') may also include flight data and/or aircraft data such as altitude and Mach number. The testing device 106 collects, generates, or otherwise acquires test data (i.e., observed data, site data) that is indicative of the actual operation of the real-world system 102.

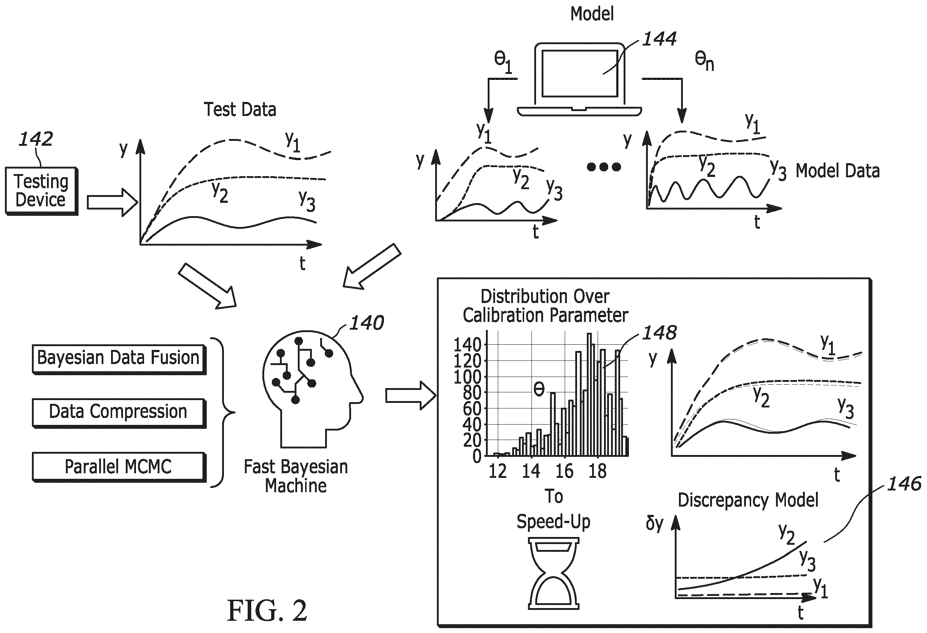

The test data may include data on one or more of the aforementioned operational parameters (y'). However, it is to be understood that the test data may include any parameter of the real-world system 102 that may be directly or indirectly measured, sensed, or observed or any parameter that may be calculated based on measured, sensed, or observed parameters. Further, when the real-world system 102 is an engine such as an engine for an aircraft, the operational parameters may be measured on-wing or on-ground or may be calculated based on parameters that are measured on-wing or on-ground. While the test data is coming from a real-world system with reference to FIG. 2, the test data does not need to be observed data from a real-world system but could be any type of target data, such as data from software, outputs from other models, or data from any other type of system.

In some examples, when the real-world system 102 is an engine, the testing device 106 may acquire data during starting, acceleration from idle to takeoff power, deceleration from takeoff power to idle, shutdowns, or similar. The testing device 106 may acquire fuel flow, engine temperatures, engine pressures, speed, or similar data.

The display device 108 is configured to present data, images, or other information relevant to the calibration of the model 112. The display device 108 may display or present test data collected by the testing device 106. Further, the display device may display or present output parameters (y), input parameters (x), and/or tuning parameters (θ), for example in graphical representations or otherwise. In some aspects, the display device 108 is associated with the testing device 106. The display device 108 may be of any suitable type including but not limited to, a cathode ray tube (CRT) device, a liquid crystal display (LCD) device, a light emitting diode (LED) device, etc. The display device 108 may also present additional information or attributes associated with the real-world system 102 and/or an identifier such as, for example, a name, model number, type, production date, etc. associated with the system.

The user input device 110 is configured to receive input from a user. The input for a user may include, but is not limited to, device settings, user preferences, component information, etc. The user input device 110 can take any suitable form. For example, the user input device 110 may include, but is not limited to a mouse, a touchscreen, a keyboard, a trackpad, a number pad, etc.

The model 112 includes one or more mathematical or physics-based functions that represent the behavior of the real-world system 102. The model 112 simulates, analyzes, or otherwise describes the operation of the real-world system 102. The model 112 receives one or more input parameters (x) (e.g., x₁ ... xₚ) and generates one or more output parameters (y) (e.g., yi ... yₘ). The output parameters (y) may include any combination of the aforementioned operational parameters. The model 112 also includes one or more tuning parameters (θ) (e.g., θ₁ ... θₙ). The model 112 may model the operation of the real-world system 102 and predict or estimate operational parameters of the real-world system 102 such as temperatures, pressures, vibration levels, rotor speeds, oil consumption, fuel consumption, or similar as the output parameters (y). In this manner, the model 112 generates or otherwise determines model data that is indicative of the simulated or predicted operation of the real-world system 102. The model data may include one or more of the aforementioned output parameters (y) of the model 112.

In some approaches, the model 112 is a physics-based model and, in some aspects, a physics-based cycle model. The model 112 may model the thermal response of the engine and predict characteristics such as fuel flow and temperatures. The model 112 may use such characteristics to predict performance characteristics such as fuel burned to generate thrust. When the model 112 is a model of an engine, examples of input parameters (x) include but are not limited to altitude, Mach number, ambient temperature, throttle lever angle, or similar. Examples of output parameters (y) include but are not limited to engine rotor speeds, fuel flow, exhaust gas temperature, or similar. Examples of tuning parameters (θ) include but are not limited to compressor efficiency, turbine flow, heat transfer coefficients, or similar.

In other approaches, the model 112 may be a model is a physics-based model of any system that can be described by physics. For example, the model may be a physics-based model of combustion dynamics, heat transfer, transient materials, or controls and electrical applications (e.g., a proportional-integral-derivative (PID) controller).

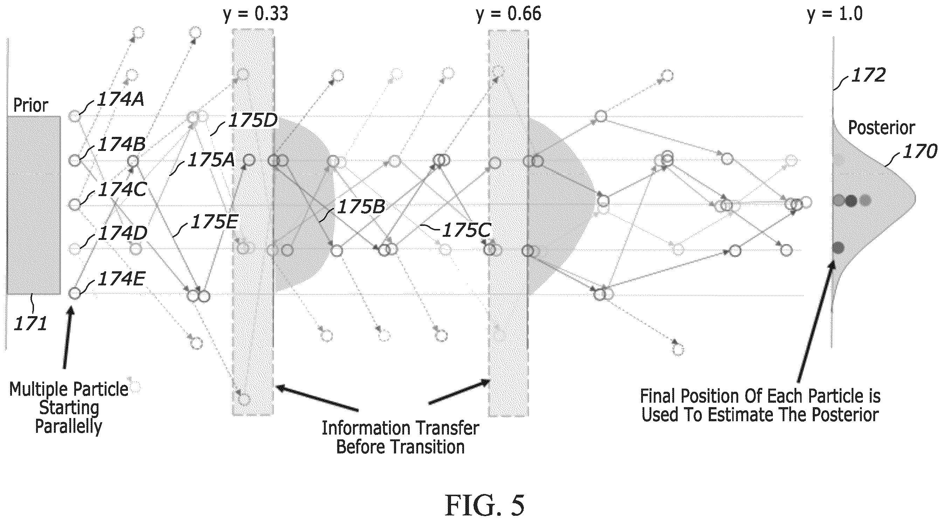

The tuning module 114 includes one or more algorithms that are employed to determine one or more possible values for the tuning parameters (θ) for the model 112. The algorithms may include but are not limited to data compression algorithms, data fusion algorithms, and parallel MCMC algorithms. The tuning module 114 may be a Bayesian machine. It is contemplated that, by employing these three types of algorithms (e.g., data compression, data fusion, and parallel MCMC), the tuning module 114 may make a Bayesian approach faster. A fully Bayesian approach is typically computationally expensive due to reliance on MCMC, which does not occur in parallel. In order to circumvent the bottleneck with typical MCMC, the tuning module 114 employed herein leverages a parallel MCMC method to reduce the computational overhead by leveraging parallel model processing and by connecting with the data compression and the data fusion algorithms. An exemplary parallel MCMC approach is illustrated in FIG. 5.

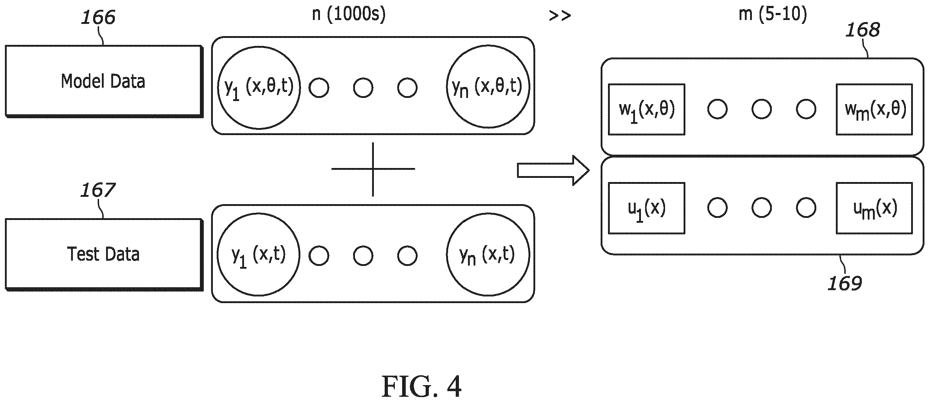

The data compression algorithms reduce the scale or dimensionality of data, such as the test data or the model data. The data compression algorithms may involve one or more of principle component analysis (PCA), locally linear embedding (LLE), compression variational autoencoder (CVAE), and manifold learning. Any suitable data compression algorithms that are capable of reducing the scale or dimensionality of a data set may be employed. The data compression algorithms reduce the number of bytes required to represent data sets and the amount of memory required to store the data. In some aspects, the data compression algorithms may reduce the scale of a data set from 1000s of data points or more to 10s of data points or less. An exemplary data compression approach is illustrated in FIG. 4.

The data fusion algorithms mathematically combine or provide for the joint analysis data from multiple sources. In some embodiments, the data fusion algorithms may fuse the model data and the test data, either in compressed or non-compressed form. Any suitable data fusion algorithms, such as multi fidelity modeling, may be employed.

The parallel MCMC algorithms involve systematic random sampling from a distribution to construct the most likely distribution for a parameter. The MCMC algorithms generate a number of values as samples for the tuning parameters of a function (e.g., the model 112) to create an approximation of the distribution. Exemplary MCMC approaches are described in more detail with reference to FIGS. 4 and 5. In addition to parallel MCMC, it is contemplated that any parallelizable Bayesian inference technique may be used in the tuning module 140. Markov chain Monte Carlo (MCMC) algorithms discover the family of potential solutions that may also explain the ground truth (i.e., the test data or field data), while using rules that reduce the computational load that comes with a higher number of parameters and large time-series data sets.

The one or more databases 116 may include or store one or more types of data that are useful to calibrating the model 112. The one or more databases 116 may include the test data that is obtained via the testing device 106 and/or the model data that is obtained via the model. The one or more databases 116 may also include any combination of data that is used by the tuning module 114 to determine the values for one or more tuning parameters (θ) for the model 112. In some embodiments, the one or more databases 116 may also include the tuning parameters (θ) or possible values for the tuning parameters (θ).

The control unit 118 (also referred to as a controller or control circuit) may function as a computing device to perform the functions and methods described herein. It is contemplated that the control unit 118 may include one or more of the model 112 and/or the tuning module 114 or otherwise may be in communication with these components of the system 100. The control unit 118 may include one or more processors 120, input/output (I/O) devices 122, transceivers 124, and memory devices 126. The processors 120 may include any suitable processing device such as a microprocessor, microcontroller, integrated circuit, logic device, or other suitable processing device. The processors 120 may be used to execute or assist in executing the steps of the processes, methods, functionality and techniques described herein, and to control various communications, decisions, programs, content, listings, services, interfaces, logging, reporting, etc. Further, the one or more processors 120 may access the memory devices 126, which may store instructions 130, code and the like that are implemented by the processors 120 to implement intended functionality.

The memory devices 126 typically include one or more processor-readable and/or computer-readable media accessed by at least the processors 120 and may include volatile and/or nonvolatile media, such as RAM, ROM, EEPROM, flash memory and/or other memory technology. Further, the memory devices 126 are shown as internal to the control unit 118; however, the memory devices 126 may be internal, external or a combination of internal and external memory. Similarly, some or all of the memory devices 126 can be internal, external or a combination of internal and external memory of the processors 120. The memory devices 126 may be substantially any relevant memory such as, but not limited to, solid-state storage devices or drives, hard drive, one or more of universal serial bus (USB) stick or drive, flash memory secure digital (SD) card, other memory cards, and other such memory or combinations of two or more of such memory, and some or all of the memory may be distributed at multiple locations over a computer network. The memory devices 126 may store data 128 such as code, software, executables, scripts, data, content, lists, programming, programs, log or history data, engine information, component information, and the like. While FIG. 1 illustrates the various components being coupled together via a bus, it is understood that the various components may actually be coupled to the control unit 118 and/or one or more other components directly.

Typically, the control unit 118 further includes one or more communication interfaces, ports, or transceivers 124 and the like allowing the control unit 118 to communicate over a communication bus, a distributed computer, and/or a communication network (e.g., a local area network (LAN), the Internet, wide area network (WAN), etc.) with other devices and/or other such communications or combinations of two or more such communication methods. Further, the transceivers 124 may be configured for wired, wireless, optical, fiber optical cable, satellite, or other such communication configurations or combinations of two or more such communications.

The I/O devices 122 may be any relevant port or combinations of ports, such as but not limited to USB, Ethernet, or other such ports. The I/O devices 122 may be configured to allow wired and/or wireless communication coupling to external components. For example, the I/O devices 122 may provide wired communication and/or wireless communication (e.g., Wi-Fi, Bluetooth, cellular, RF, and/or other such wireless communication), and in some instances may include any suitable wired and/or wireless interfacing device, circuit and/or connecting device, such as but not limited to one or more transmitters, receivers, transceivers, or combination of two or more of such devices.

The control unit 118 may receive data from various components of the system 100. Further, the control circuit may transmit data to various components of the system 100. For example, the control unit 118 may receive data from the testing device 106, which may include test data indicative of measured or observed operational parameters or performance characteristics of the real-world system 102. The control unit 118 may also receive data from the model 112, For example, the control circuit may receive data on the input parameters (x), output parameters (y), and/or tuning parameters (θ) of the model 112. The control unit 118 may also receive input data from the user input device 110 and provide instructions to the testing device 106 based on such input data. It is contemplated that the tuning module 114 may be integrated into or separate from the control unit 118.

As illustrated in FIG. 1, the various components of the system 100 may communicate directly or indirectly, such as over one or more distributed communication networks, such as a network 132. For example, the network 132 may include LAN, WAN, Internet, cellular, Wi-Fi, and other such communication networks or combinations of two or more such networks.

In operation, the system 100 calibrates the model 112 using test data acquired via the testing device 106, model data acquired via the model 112, and the tuning module 114. In some aspects, the test data and model data may be stored in the one or more databases 116 for use by the tuning module 114.

The testing device 106 performs tests on the real-world system 102 to generate test data. The test data includes one or more operational parameters (y') monitored or otherwise observed by the testing device 106. Simulations or analysis are performed using the model 112 to generate model data. The model data includes one or more output parameters (y) as predicted or estimated using the model 112. The tuning module tuning module 114 then reduces the scale of the test data and the model data via the data compression algorithms. The compressed model data is fused with the compressed test data. The fused data is then analyzed via parallel MCMC algorithms to determine possible values for one or more tuning parameters (θ) for the model 112. The determined values for the tuning parameters (θ) may be used in the model 112 to generate a calibrated or tuned model.

In some embodiments, the system 100 may also optionally include a manufacturing device 134. The manufacturing device 134 may be any suitable manufacturing device that is capable of manufacturing a component of the real-world system 102. A suitable manufacturing device 134 may be, for example, an additive manufacturing device. In some aspects, the system 100 may cause the manufacturing device 134 to manufacture a component of the real-world system 102 based on the results from simulations run using the calibrated model.

In yet other embodiments, the system 100 may further optionally include a control system 136. The control system 136 may be operable to control operation of the real-world system 102. When the real-world system 102 is an engine, the control system 136 may be an engine control system. In some aspects, the system 100 may cause the control system 136 to adjust at least one setting of the control system 136 based on results of simulations run using the calibrated model.

Turning to FIG. 2, a tuning module 140 that performs data-compression driven tuning is provided. The tuning module 140 may be Bayesian machine that is configured to employ Bayes theorem to determine conditional probabilities that one or more tuning parameters (θ) for the model will minimize or otherwise reduce the error between the test data and the model data.

The tuning module 140 receives test data, either directly or indirectly, from a testing device that monitors a real-world system 142. The testing device performs operational tests on a real-world system to determine operational parameters y'₁, y'₂, y'₃ for a real-world system. The test data is time series data that provides the operational parameters y'₁, y'₂, y'₃ as a function of time.

The tuning module 140 receives model data, either directly or indirectly, from a model 144 of the real-world system. The model 144 includes tuning parameters θ₁ ... θₙ. The model 144 predicts or estimates the operational parameters of the real-world system 142. The predicted operational parameters are generated as output parameters yi, y₂, y₃ of the model 144. The model data is time series data that provides the output parameters yi, y₂, y₃ as a function of time.

The tuning module 140 then analyzes the model data and the test data using data compression algorithms, Bayesian data fusion algorithms, and parallel MCMC algorithms to derive a distribution 148 of a tuning parameter θ for the model 144. The distribution 148 provides a probability that a particular value for the tuning parameter θ is a suitable candidate for the tuning parameter (i.e., will minimize or otherwise reduce the error between the test data and the model data). Compressing the time series data and applying parallel MCMC on the compressed data speeds-up the model calibration process. Further, tuning via the tuning module improves accuracy of the calibration process so that the predicted operational parameters (i.e., output parameters yi, y₂, y₃) from the model are closely aligned with the observed operational parameters (i.e., operational parameters y'₁, y'₂, y'₃) observed by testing the real-world system 142. One or more tuning parameters obtained via the tuning module 140 may be used in the model 144 to generate a tuned model.

In some approaches, the tuning module 140 may also generate a discrepancy model 146. The discrepancy model 146 provides the error (i.e., also referred to as the difference or the discrepancy) between the predicted operational parameters (*i.e*., output parameters yi, y₂, y₃) that are generated using the tuned model and the observed operational parameters (*i.e*., operational parameters y'₁, y'₂, y'₃). The error between observed and predicted operational parameters is represented by δy in FIG. 2. The discrepancy model 146, for example may provide time-series data that predicts the error δy as a function of time.

If the discrepancy model 146 can be correlated to a physics-based parameter, the discrepancy model 146 may be used to further tune the model. In addition, the discrepancy model 146 may also identify sources of discrepancy, in particular, as a correlation between the error δy and one or more model input parameters (such as the input parameters x referred to in FIG. 1). Once identified, the tuning module 140 may utilize the correlations between the error δy and the model input parameter (x) in the model to further improve model predictions.

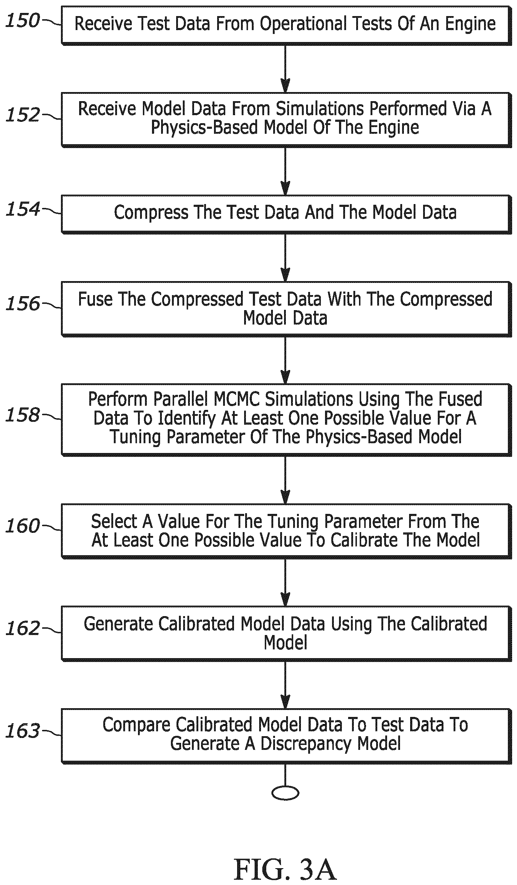

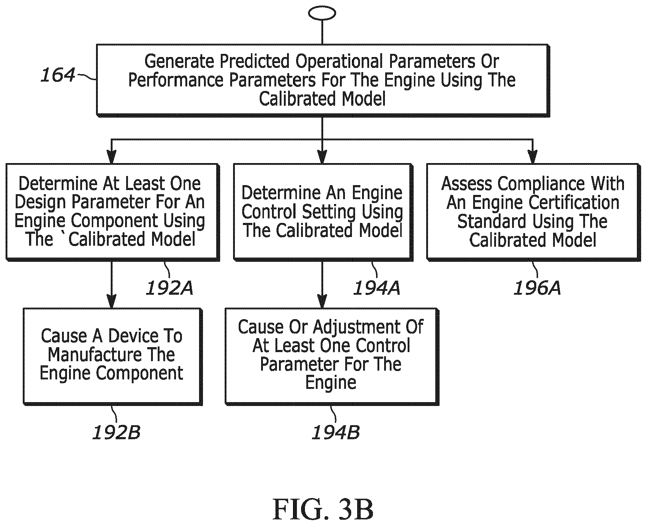

With reference to FIGS. 3A and 3B, an exemplary method of calibrating a model of an engine is provided. In a typical application setting many (but not necessarily all) of the steps illustrated in FIGS. 3A and 3B are carried out using a model calibration system, which in some approaches may include one or more components of the system 100. While the method is described with reference to an engine, it is contemplated that the method may also be applied to other real-world systems.

At block 150, the model calibration system 100 receives test data from operational tests of an engine. The operational tests may be performed via one or more testing devices that monitor one or more performance characteristics of the engine. Such operational parameters may include, for example, engine temperatures, speeds engine pressures, flow rates, fuel consumption, etc. The test data includes the observed or actual operational parameters of the engine. It is also contemplated that the test data may include performance characteristics of the engine that the model calibration system 100 calculates based on the observed operational parameters of the engine.

At block 152, the model calibration system 100 receives model data from a model of the engine. For example, the model may perform simulations of the engine to model the operational parameters of the engine to generate the model data. As described above, operational parameters of the engine such as fuel flow, speeds, temperatures, pressures, etc. may be predicted using a model to generate the model data. It is contemplated that, in some aspects, the model data may also include performance characteristics, such as the thrust-specific fuel consumption (i.e., the fuel burned to generate thrust), of the engine that the model calculates based on the operational parameters.

At block 154, the model calibration system 100 compresses the test data to generate compressed test data. The model calibration system 100 also compresses the model data to generate compressed model data. Compression reduces the dimensionality of the test data and the model data.

At block 156, the model calibration system 100 fuses the compressed test data with the compressed model data to generate fused data. The model calibration system 100 may fuse the test data and the model data using one or more data fusion algorithms. The fused data may have the segmentation into input parameters, tuning parameters, and output parameters as present before data compression. However, the data size of the incoming data (*i.e*., data before fusing) is reduced, for example, from a time-scale of 1000s to the 10s or less, for several performance outputs simultaneously or in-conjunction with one another.

At block 158, the model calibration system 100 performs a parallel MCMC simulations using the fused data to identify at least one possible value for a tuning parameter of the model. It is contemplated that the model calibration system 100 may employ any parallelizable Bayesian inference technique to determine values for the tuning parameter. In particular, the model calibration system 100 may generate a distribution for the tuning parameter, where the distribution provides a probability that a particular value is a suitable candidate for the tuning parameter.

At block 160, the model calibration system 100 selects a value for the tuning parameter from the at least one possible value for the tuning parameter to calibrate the model. At block 162, the model calibration system 100 may then use the selected value for the tuning parameter to generate a calibrated model. The model calibration system 100 may then use the calibrated model to generate calibrated model data. The calibrated model data may, for example, provide a calibrated prediction of a model output parameter such as an operational parameter of the engine. For example, the calibrated model may predict engine response at conditions not run on-test (i.e., to extrapolate results to areas where the engine has not run), for example, at varying altitudes, inlet temperatures, control schedules, or similar.

The determination of what constitutes a calibrated model is typically set by the intended use of the model and/or design practices and is based on the error or difference between the model data and the test data. It is contemplated that any target error could be accomplished based on the use case. In some aspects, a calibrated model may exhibit about 50% error or less, 20% error or less, about 10% error or less, or in some aspects, 5% error or less, where the error reflects the difference between the model data (i.e., output parameters predicted by a model using selected tuning parameters) and the test data.

It is contemplated that the method may be employed to generate possible values for a plurality of different tuning parameters for the model. In this manner, the model calibration system 100 system may generate a family of tuning parameters values that may be employed to generate a calibrated or tuned model.

In some approaches, at block 163, the model calibration system 100, optionally, may compare the calibrated model data to the test data to generate a discrepancy model. The discrepancy model provides the error between the calibrated model data and the test data.

In some approaches, at block 164 the calibrated model may be used to generate predicted operational parameters for the engine. The calibrated model may also be used to forecast or predict performance characteristics for the engine. Such performance characteristics may include performance characteristics for operation of the engine, including at new and/or untested input parameters. Performance characteristics may include but are not limited to thrust, fuel burn, speeds, airflows, pressures, and/or temperatures throughout the engine system. For example, the calibrated model may be used to assess performance parameters for an engine within a flight envelope. Further, not all parameters of the engine can be feasibly sensed during engine operation (*e.g*., airflow at combustor inlet, high pressure turbine blade temperature, etc.). The calibrated model may be used to predict such parameters. In addition, the calibrated model may be used to simulate overspeed events, for example, to predict conditions that result in overspeed and the extent to which overspeed occurs at various engine conditions. In this manner, the calibrated model may be used to certify that the engine complies with standards for airworthiness.

In some approaches, at block 192A, the model calibration system 100 may optionally also be used to determine at least one design parameter for an engine component using the calibrated model. For example, the calibrated model may be used to determine a design parameter for an actuator (*e.g*., as actuator length or rod area), a fuel pump (*e.g.*, total flow allowance), or a booster (*e.g*., based on where the engine stalls in the flight envelope). The predicted performance characteristics may be employed to determine one or more design features and/or parameters for the engine component. That is, the calibrated model may be used to predict performance characteristics and select design features and/or parameters for an engine to achieve particular performance characteristics.

At block 192B, the model calibration system 100 may cause a device to manufacture the engine component according to the design parameter. The device may be any suitable manufacturing device such as an additive manufacturing device. Thus, engine components thereof may then be manufactured based on the design features and/or parameters.

For example, the calibrated model of the engine may be used to assess a preliminary design for an engine component. The calibrated model may provide a direct representation of the engine in digital form. Simulations may be run using the calibrated model in order to determine the performance of the preliminary design. For example, the calibrated model may be used to assess how the preliminary design performs with respect to performance targets or other objectives. In this manner, the calibrated model may be used to assess whether a particular design parameter is suitable. Transient simulations using the calibrated model may be run to study the preliminary design with time varying conditions for power level, sudden load applications, etc. The accuracy of the predictions of the calibrated model that are generated using the method of FIGS. 3A and 3B may allow for the assessment of a design for an engine component without running physical tests on the component or with reduced physical testing on the component.

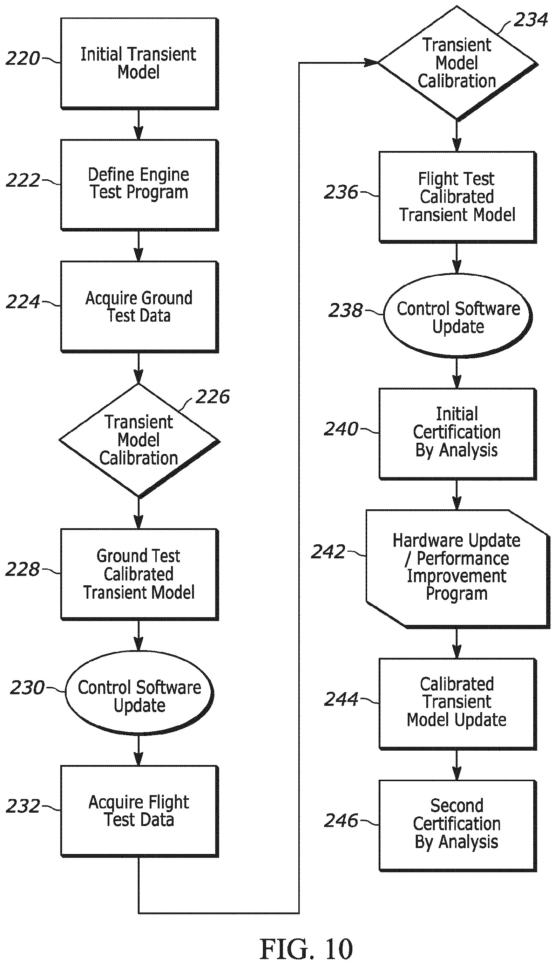

In another example, the calibrated model may be used to certify an engine. FIG. 10 details an exemplary certification process using a model calibrated using the approaches described herein. For example, during the engineering development phase one or more engine design parameters may be adjusted to improve the production design. To continue with certification these design modifications may involve either additional engine testing or a highly accurate digital model that can be used to substantiate the impact of the design changes. The tool set and process detailed in FIG. 10 may be used to re-calibrate the digital model to ensure that it is correctly tuned to match the engine. Following the tool set and modeling approaches described herein improve the efficiency and speed of calibration. Applying traditional approaches for engine model calibration may take several months to calibrate and certify an engine. The approaches of model calibration described herein may allow for fast calibration and recalibration for certification.

In other approaches, at block 194A, the model calibration system 100 may optionally determine an engine control setting using the calibrated model. At block 194B, the model calibration system 100 may cause or otherwise affect the adjustment of at least one control parameter for the engine based on the output of the calibrated model. In some aspects, the model calibration system 100 may cause an engine control system to adjust at least one control parameter for the engine.

For example, the calibrated model may be used to determine initial control settings for an engine. Control settings may include but are not limited to power management schedules, fuel management schedules, positioning stator vanes, or similar. Based on these control settings, the calibrated model may predict various parameters about the engine such as pressures, temperatures, and/or flow rates. Simulations may be run using the calibrated model in order to optimize or otherwise improve engine performance through the selection of appropriate control settings. The calibrated model may aid in the selection of control settings to optimize or improve engine performance from a number of different viewpoints including, for example, to maximize range, reduce fuel consumption, increase thrust, improve operability, reduce fuel burn during a step climb, improve climb performance, or similar. In some approaches, initial control settings may be set for testing and, also, for optimization. For example, it may be possible to adjust control settings from cautious or conservative settings to more aggressive settings to push the performance of the engine. Using the digital model to perform this control system optimization may greatly reduce the amount of full engine test time required to design, certify, and field an initial or upgraded product.

In another example, the calibrated model may be used to assess alternative methodologies for control such as pressure ratio, speed, versus flight condition methodologies. The calibrated model may be used to run tests to compare one control methodology to another. Such an approach may be used to determine if controlling based on one type of data versus another may be more relevant or advantageous.

In some approaches, the calibrated model may also be used to develop linear models that may be used in a multiloop control system having two control loops (an inner loop and outer loop). An inner loop, for example, may be used to determine how to get variable stator vanes to a position and an outer loop may determine a target position for the variable stator vanes for the engine.

In yet other approaches, at block 196A, the model calibration system 100 may determine or assess compliance with an engine certification standard using the calibrated model. The model calibration system 100 may compare the performance parameter that is predicted using the calibrated model to one or more defined performance standards in order to determine whether the engine complies with a certification and/or airworthiness standard.

For example, the calibrated model may be used to demonstrate stall free performance around a flight envelope as part of a certification effort for engine operation. The calibrated model can be developed from a limited population of unique engines tested across a small sub-set of the flight envelope. Using the calibrated model, the characteristics or performance of one engine may also be applied to a whole family of engines to further improve the efficiency of certification efforts. In some approaches, the calibrated model may be used to certify by analysis without the need for engine testing or with reduced engine testing. The method of FIGS. 3A and 3B may generate a calibrated model with a relatively low error (*e.g*., error of model output as compared to actual engine test values). The error for predictive models, before the calibration is applied may be between 5% to about 10% error, in some aspects. Once the model has been calibrated, that error may be reduced to less than 5% error, or, in some aspects, less than 2% error for certification of critical aspects. The low error in the model output may enable certification of the engine or components thereof without engine testing or with reduced engine testing. The use of this low error model may be useful for certification reports like engine operations that would otherwise require full flight envelope testing of the engine, or for failure analysis testing that may put engine development hardware at risk.

By eliminating or reducing the need for engine testing, the calibrated model that is generated using the method of FIGS. 3A and 3B may also enable certification of the engine or evaluation of engine design parameters or control settings to occur in a relatively short period of time, for example, in a number of hours or days as opposed to over a number of years as compared to approaches using actual engine testing. For example, tens of thousands to millions of simulations may be run to assess engine operational performance and with a well calibrated model, those simulations may be run using a model versus on an actual engine.

In yet other approaches, the method may include a feedback loop such that there is iterative feedback of test data into the model. In this manner, the model may be re-tuned using new test data to further improve model accuracy and fine-tune values for the tuning parameters. In some aspects, there may be real-time feedback into the model so that the model calibration system 100 may receive new test data in real time and re-tune against the newly received test data in real-time using the method of FIGS. 3A and 3B or portions thereof.

Though the method of FIGS. 3A and 3B is applied to an engine, it is contemplated that the method may be used with models of other real-world systems.

FIGS. 4-7 provide an exemplary analysis that may be performed via a tuning module to determine values for tuning parameters of a model.

FIG. 4 illustrates an exemplary approach for data compression which reflects PCA-based mappings to reduce the dimensionality of transient data (i.e., time-varying data). The data compression takes time-varying parameters (y) and projects them as spatially-varying components (u, w). There are two input data sets that include time-varying parameters (y): an input model data set 166, and an input test data set 166. There are two output data sets include the spatially-varying components (u, w): an output model data set 168, and an output test data set 169.

The input model data set 166 (*e.g.*, first input data set) includes time-varying model data. The input test data set 167 (*e.g.*, second input data set) includes time-varying test data. The input model data set 166 and the input test data set 167 include multiple (a number "n") records of the time-varying parameter (y). In some examples, the number "n" is in the 1000s.

PCA-based algorithms reduce the dimensionality of the input model data set 166 generate an output model data set 168 (*e.g.*, first output data set). As shown, the input model data set 166 represents a parameter (yi) as a function of an input parameter (x), a tuning parameter (θ), and time (t) (i.e., yi = f (x, θ, t)). In the input model data set 166, the parameter (yi) is an output parameter predicted by a model of a real-world system. The input parameter (x) is an input parameter to the model. The input parameter (x) represents a condition of the real-world system. The output model data set 168 includes spatially varying model data and is not time varying. That is, the output model data set 168 represents the parameter (yi) as a parameter wi, which is a function of only the input parameter (x) and the tuning parameter (θ) (i.e., wi = f (x, θ)). The PCA-based algorithms convert the input model data set 166 to the output model data set 168.

In addition, PCA-based algorithms also reduce the dimensionality of the input test data set 167 and generate an output test data set 169 (*e.g*., second output data set). As shown, the input test data set 167 represents the parameter (yi) as a function of an input parameter (x) of the real-world system and time (t) (i.e., yi = f (x, t)). The input parameter (x) is an input parameter to the model that represents a condition of the real-world system, for example as measured or observed. In the input test data set 167, the parameter yi is a measured or observed parameter in the real-world system. The output test data set 169 includes spatially varying model data and is not time varying. That is, the output test data set 169 represents the parameter (yi) as a parameter (ui), which is function of only the input parameter (x) (i.e., wi = f (x, θ)). The PCA-based algorithms convert the input test data set 167 to the output test data set 169.

The output data sets (i.e., the output model data set 168 and the output test data set 169) include fewer records (a number "m") than the input data sets (i.e., the input model data set 166 and the input test data set 167). That is the PCA-based algorithms compress "n" records in the input data sets to "m" records in the output data sets. That is, the number "m" is smaller than the number "n." In some aspects, the number "m" is in the 10s, in some aspects it is less than 10, and, in yet other aspects, it is between about 5 and about 10.

As depicted in FIG. 4, data compression eliminates the time-varying component of the input model data set 166 and of the input test data set 167. In this form, the output model data set 168 may be fused with the output test data set 169. For example, data on the parameter (w₁) in the output model data set 168 may be aligned with data on the parameter u₁ in the output test data set 169 to generate a fused data set based on common values for the input parameter (x). Thus, data fusion algorithms fuse two spatially varying data sets (*e.g*., the output model data set 168 and the output test data set 169) to generate the fused data set. A tuning module, such as the tuning module 114, may optimize the tuning parameters (θ) for the model using the fused data set. In some approaches, mathematical formulas or equations such as parallel MCMC algorithms may determine which tuning parameters (θ) best align the output model data set 168 with the output test data set 169.

FIG. 5 illustrates a simulation using a parallel MCMC process. The simulation generates a distribution 170 for a tuning parameter (θ) of a model. The distribution 170 is an aposteriori distribution. The distribution 170 is generated based on a distribution 171, which serves as an apriori distribution. Values along the vertical lines 172 illustrate different values for the tuning parameter (θ). The distribution 170 reflects a probability that a particular value is a suitable candidate for the tuning parameter (θ). Multiple particles-a particle174A, a particle 174B, a particle 174C, a particle 174D, a particle 174E-are analyzed in parallel to streamline and increase the speed of the analysis. Each particle has an initial sample value to initiate the stochastic optimization of the tuning parameter (θ). The lines show the trajectory of each particle through the analysis. A line 175A shows the trajectory of the particle 174A. A line 175B shows the trajectory of the particle 174B. A line 175C shows the trajectory of the particle 174C. A line 175D shows the trajectory of the particle 174D. a line 175E shows the trajectory of the particle 174E. Dashed lines and dots represent values of the particle that were rejected as a tuning parameter value. Solid lines and dots represent values that were accepted as a tuning parameter value. The analysis of multiple particles in parallel in parallel MCMC as shown in FIG. 5 results in a faster analysis and improves computational efficiency for the model calibration process as compared with naive (i.e., non-parallel) MCMC, which has a computationally burdensome single particle operation.

The simulation may run the MCMC algorithms may run for a set number of iterations and select the top values for the tuning parameters based on the probability weight. The probability weight is obtained by fusing a likelihood probability of explaining the test data with an apriori value of the value being the optimal solution.

It is contemplated that parallel MCMC algorithms, such as those illustrated in FIG. 5, may be used to provide possible values for the tuning parameter (θ) that generates accurate predictions for multiple model output parameters (y). That is, the MCMC algorithms may optimize or reduce the error between the model data and the test data for multiple parameters (y) rather than selecting tuning parameter values for each output parameter separately. Further, using such parallel MCMC algorithms it is possible to obtain a distribution for multiple tuning parameters (θ) in the model simultaneously. In this manner, methods described herein may provide one set of solutions (i.e., a family of tuning parameters) that would work for a plurality of or, in some aspects all, output parameters of a model. For example, where a model includes 5 tuning parameters, using the approaches described herein, it is possible to tune all 5 parameters together. In addition, it is possible to tune all 5 parameters to optimize for multiple output parameters of the model, for example, flow, temperature, and pressure rather than for a single output parameter (*e.g*., for temperature).

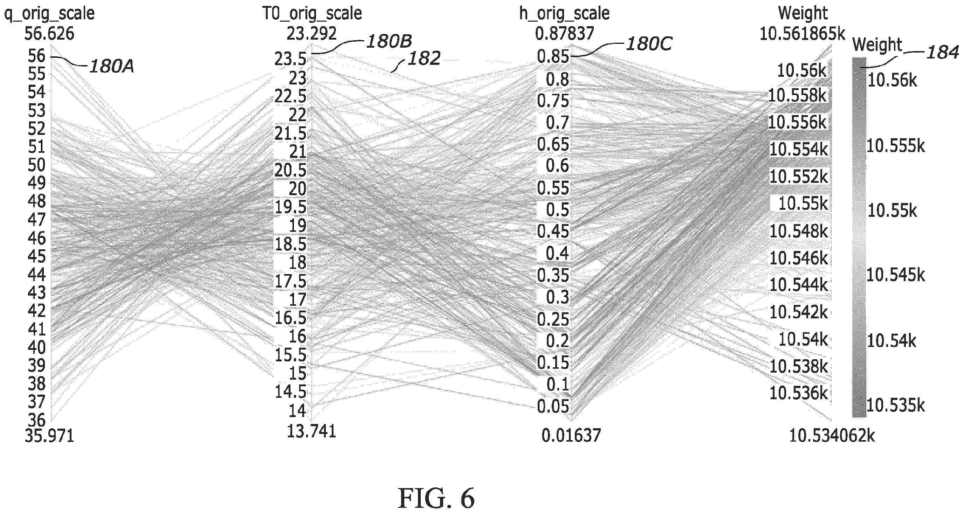

FIG. 6 illustrates a joint plot of possible values for multiple tuning parameters (θ) for a model. Vertical lines-a line 180A, a line 180B, a line 180C-each represent a range of possible values for a different tuning parameter. The line 180A represents a range of values for a tuning parameter q. The line 180B represents a range of values for a tuning parameter T0. The line 180C represents a range of values for a tuning parameter h. The lines 182 extending across the joint plot illustrate different combinations of values for the three different tuning parameters - the tuning parameter q, the tuning parameter T0, and the tuning parameter h. The line 184 represents a "weight" for each different combination. The highest weight on line 184 provides the most optimal or best combination of values for the different tuning parameters (i.e., the combination that most closely aligns test data and model data).

The weight is the logarithm of the aposteriori probability for a given value of the tuning parameter. Fusing the likelihood probability with the apriori probability allows one to derive an estimate of the aposteriori probability. The fusion is performed using Bayes' theorem. The distribution 170 in FIG. 5 depicts an exemplary aposteriori probability distribution, whereas the distribution 171 depicts an exemplary apriori distribution. For a given value of the tuning parameter, the weight is approximated by fusing the likelihood probability of explaining the test data with the apriori probability of the value being the optimal solution, that is, the solution that minimizes error between the test data and the model data.

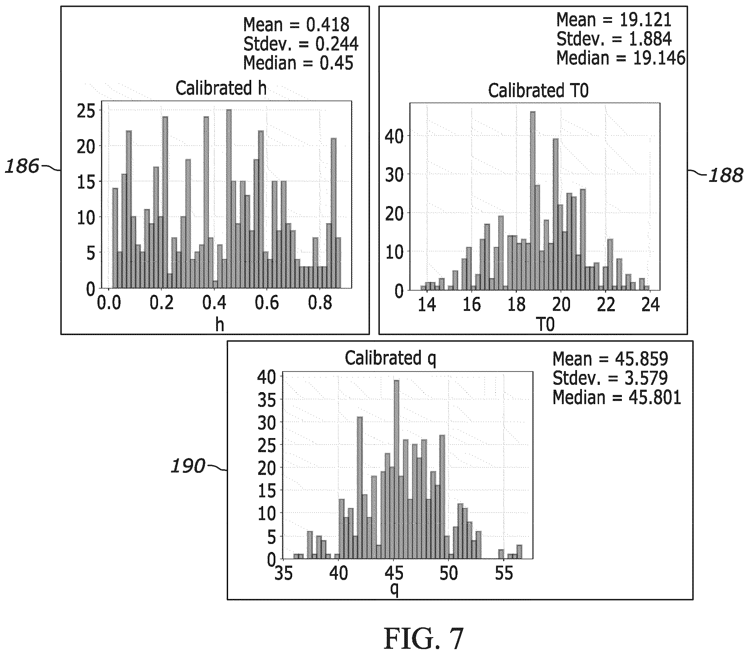

FIG. 7 illustrates exemplary distributions generated by parallel MCMC analysis using test data and model data. A distribution 186 for tuning parameter h and a distribution 188 of tuning parameter T0 are provided. A distribution 190 of tuning parameter q is also provided. The distribution 186 provides a range of possible values for the tuning parameter h that is used in the graph in FIG. 6. The distribution 186, the distribution 188, and the distribution 190 were obtained by performing parallel MCMC analysis on compressed and fused test data and model data via the approaches described herein.

The distribution 186 illustrates the range of values on the vertical line 180C on the graph of FIG. 6. The values on the x-axis of the distribution 186 represent possible values for the tuning parameter h that will optimize or otherwise improve model tuning. The y-axis of the distribution 186 represents a probability that the particular value of h on the x-axis will optimize or otherwise improve model tuning.

The distribution 188 provides a range of possible values for the tuning parameter T0 that is used in the graph in FIG. 6. The distribution 188 illustrates the range of values on the vertical line 180C on the graph of FIG. 6. The values on the x-axis of the distribution 188 represent possible values for the tuning parameter T0 that will optimize or otherwise improve model tuning. The y-axis of the distribution 188 represents a probability that the particular value of T0 on the x-axis will optimize or otherwise improve model tuning.

The distribution 190 provides a range of possible values for the tuning parameter q that is used in the graph in FIG. 6. The distribution 190 illustrates the range of values on the vertical line 180A on the graph of FIG. 6. The values on the x-axis of the distribution 190 represent possible values for the tuning parameter q that will optimize or otherwise improve model tuning. The y-axis of the distribution 190 represents a probability that the particular value of q on the x-axis will optimize or otherwise improve model tuning.

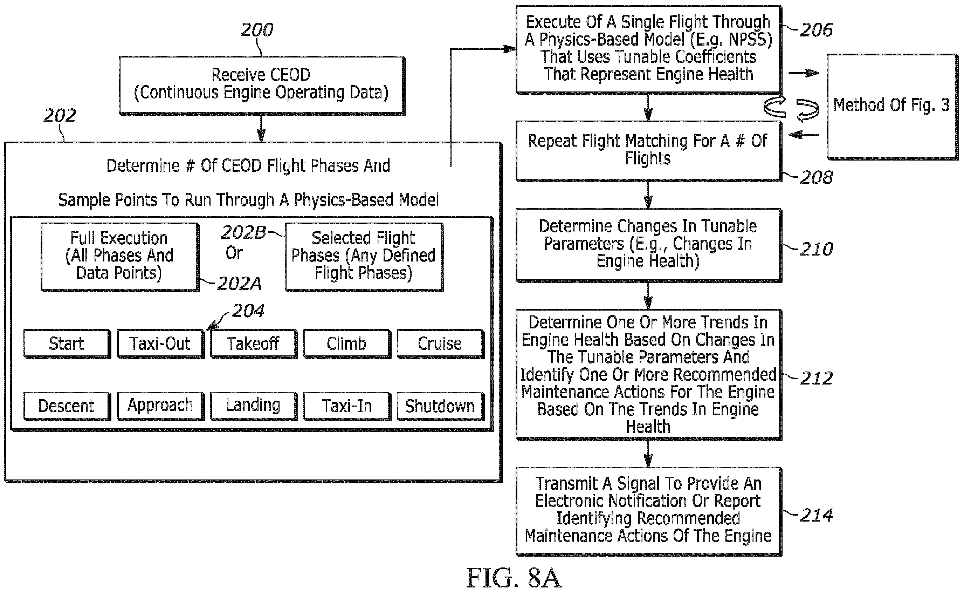

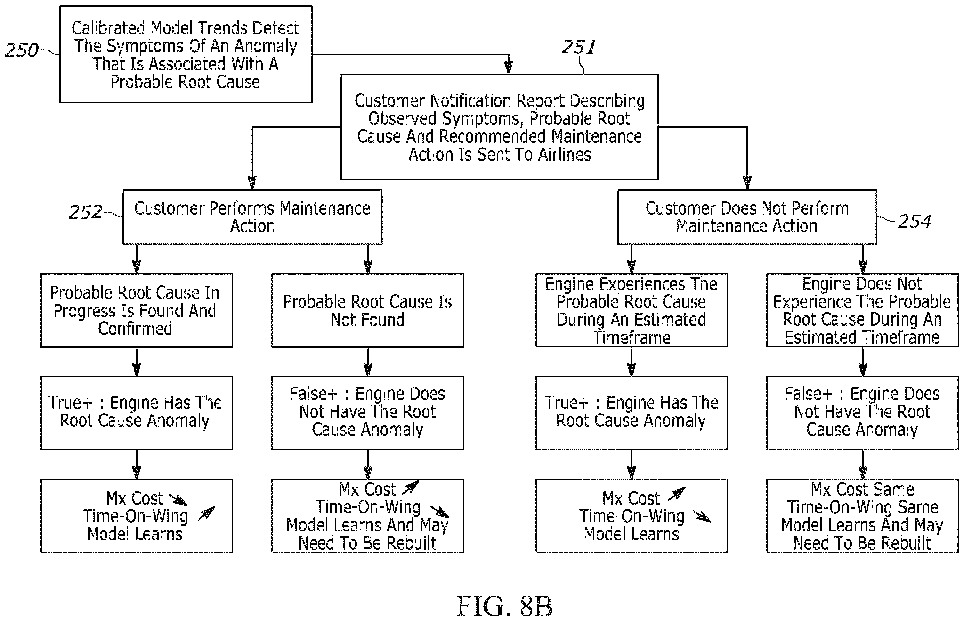

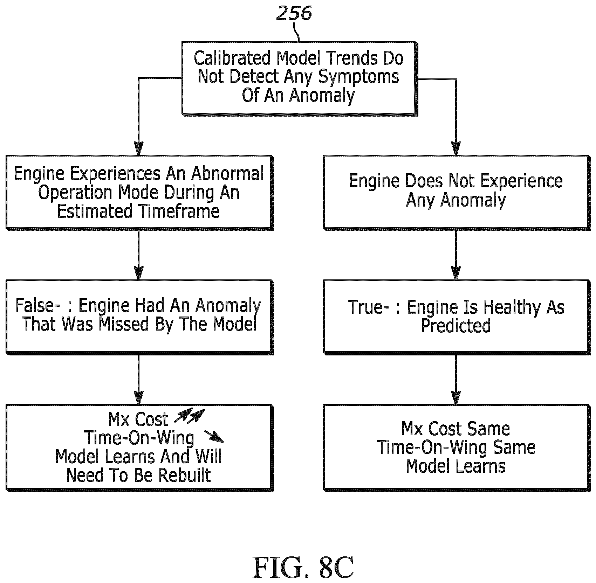

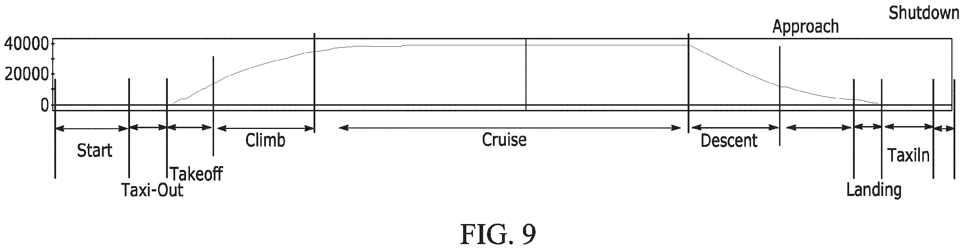

FIGS. 8A, 8B, and 8C illustrate another exemplary application of the methods and system for model calibration described herein. In particular, FIGS. 8A-8C illustrate a method of prognostics health monitoring and health management/engine health monitoring (PHM/EHM) for an engine where a PHM/EHM model is tuned using the methods described herein. The PHM/EHM model may be a physics-based model for engine prognostics and/or engine health monitoring. Input data for the PHM/EHM model may be flight data and/or test cell data. Exemplary flight data is shown in FIG. 9. The PHM/EHM model may predict early symptoms of a developing engine failure and, therefore, may be able to prevent engine failure, reducing costly maintenance. Further, the PHM/EHM model provides engine health forecasting which may help to improve fleet management. Using the methods of model calibration described herein to calibrate the PHM/EHM model may result in a higher confidence level for predictions with respect to when and which engine components may fail.

Turning first to FIG. 8A, at block 200, the PHM/EHM system receives flight data or continuous engine operating data (CEOD). It is to be understood that the CEOD need not be exactly continuous and may have one or more interruptions. The CEOD may include any information generated, for example, by a digital flight recorder or similar device related to engine or aircraft flight and performance parameters. In some approaches, the input data may include one or more of altitude, Mach number, and a power parameter such as power level angle (PLA) or rotor speed.

At block 202, the PHM/EHM system may determine or otherwise receive an indication of a number of flight phases and sample points in the CEOD to run through the physics-based model. In some approaches, the physics-based model may run simulations using CEOD data from all phases and all data points of the CEOD data (*see* block 202A). In other approaches, the physics-based model may run simulations using CEOD data from one or more selected flight phases 204 (*see* block 202B). The flight phases 204 may include but are not limited to start, taxi-out, takeoff, climb, cruise, descent, approach, landing, taxi-in, and shutdown.

In some approaches, the PHM/EHM system may determine or otherwise receive an indication of a sub-selection of data points in one or more flight phases. The sub-selection may involve one or more of a minimum value, a maximum value, data points around the mean with some confidence interval, data points around the median value with some confidence interval, and data points around specific distribution percentiles with some confidence interval. The sub-selection may also occur at fixed time intervals or using any other logic.

At block 206, the PHM/EHM system may execute a single flight through the physics-based model. In some approaches, the physics-based model may be a Numerical Propulsion System Simulation (NPSS) cycle model. The NPSS model may predict various parameters about the internal conditions of an engine such as pressures, temperatures, and flow rates. The NPSS model may model a gas turbine engine or a hybrid electric engine. There may be a number of outputs generated by the NPSS model. One example of the NPSS model output is a predicted core rotor speed at the operating conditions.

The physics-based model may use tunable coefficients (*e.g*., tuning parameters) that represent engine health. Accordingly, the physics-based model may be tuned using the method described with reference to FIGS. 3A and 3B (*see* blocks 150-162). In particular, the method described with reference to FIGS. 3A and 3B may be used for flight matching to match output of the physics-based model to the CEOD data.

In some aspects, at block 208, the PHM/EHM system may repeat the flight matching described with reference to block 206 to fine-tune the tuning parameters of physics-based model. For example, the PHM/EHM system may repeat flight matching for a number of flights and, in some aspects, for a number of consecutive flights.

At block 210, the PHM/EHM system may determine one or more changes to the tuning parameters for the physics-based model. The changes in the tuning parameters may be indicative of changes in engine health. Thus, at block 212 the PHM/EHM system may determine one or more trends in engine health based on the changes in the tuning parameters. The PHM/EHM system may use statistical approaches to determine engine health trends based on changes in the tuning parameters that have been with confirmed statistical significance. In some approaches, the PHM/EHM system may determine trends in the tunable parameters depending on flight phase. In yet other approaches, the PHM/EHM system may determine how changes occur (*e.g.*, gradual shifts, sudden shifts). The trends in engine health and/or trends in the tuning parameters may be used to identify one or more recommended maintenance actions for the engine.

At block 214, the PHM/EHM system may transmit or cause the transmission of a signal to provide an electronic notification or report identifying the recommended maintenance actions for the engine. In some approaches. For example, the PHM/EHM system may send a recommendation to an airline or individual associated with the engine such as maintenance personnel, owner, etc. to take one or more specific maintenance actions. The maintenance actions may aim to increase time on wing or to transform unscheduled engine removals into planned engine removals for improved fleet management and to reduce significant events. In another example, the PHM/EHM system may prioritize the rank order of engines at most risk or during which an identified design modification is being implemented into fielded engines. In yet another example, the maintenance actions may support a period during which an engine design is being evaluated or during which an engine redesign is being assessed.

In some embodiments, a physics-based model may be calibrated using single flight data (e.g., single flight matching). In other embodiments, the physics-based model may be calibrated using multi-flight data in which case the X axis of the time series data may be converted to engine hours, indicative of engine duration.

Turning to FIG. 8B, at block 250, the PHM/EHM system may detect symptoms of an anomaly in the engine that is associated with a probable root cause based on the trends in engine health determined via the calibrated model.

At block 251, the PHM/EHM system may transmit or otherwise cause the transmission of a customer notification report or an alert to another system, such as a to a system associated with one or more airlines. The customer notification report may describe observed symptoms of the engine, probable root causes, and/or recommended maintenance actions. In one example, a symptom can be a sudden increase in oil filter delta in a flight compared to its prior personalized history. Upon receiving and confirming such symptom with prior knowledge, probable root causes may be identified as a sudden clogging of the filter due to various reasons including but not limited to oil contamination or a mechanical failure. The recommended maintenance action may be to change the oil filter within a specified timeframe depending, for example, on the oil level and how far it is from an impending bypass threshold. In another example, systems may detect a sudden increase in exhaust gas temperature (EGT) and fuel flow, along with a decrease in core speed. Upon receiving and confirming such a symptom, probable root causes could be but are not limited to high pressure turbine efficiency loss due to either external active clearance control system leakage or internal high pressure turbine blade, shroud, or nozzle guide vane interruptions. The recommended maintenance action may be to check the operation and ducting of the high pressure turbine active clearance control system and, if no findings, to perform a borescope inspection of the high pressure turbine.

At block 252, one or more maintenance actions may be performed on the engine in response to the customer notification report. The maintenance actions may be performed by a customer such as an airline.

With the maintenance actions, the probable root causes identified in the customer notification report may be found and confirmed. Thus, the engine is determined to have the root cause anomaly and the calibrated model correctly identified the root cause anomaly (e.g., a true positive). In such a scenario, maintenance costs may decrease and time on wing increase. The true positive may be used to further train the PHM/EHM model and improve model accuracy.

Alternatively, with the maintenance actions, the probable root cause may not be found. Thus, the engine is determined to not have the root cause anomaly and the calibrated model did not correctly identify the root cause anomaly (e.g., a false positive). In such a scenario, maintenance costs may increase and time on-wing may decrease. The false positive may be used to train the PHM/EHM model and improve model accuracy. In some approaches, the model may also need to be rebuilt or recalibrated.

At block 254, a maintenance action is not performed in response to the customer notification report. As a result, the engine may experience the probable root cause during the estimated time frame. Accordingly, it may be determined that the engine has the root cause anomaly (e.g., a true positive). Not addressing the root cause anomaly may increase maintenance costs and decrease time on-wing. Again, the true positives may be used to further train the PHM/EHM model. Alternatively, the engine may not experience the probable root cause during the estimated timeframe. Accordingly, it may be determined that the engine does not have the root cause anomaly identified via the calibrated model in the customer notification report (e.g., a false positive). The false positive in this scenario results in the same maintenance costs and the same time on-wing. The model may be trained using the false positive or, in some approaches, may need to be rebuilt or recalibrated.

Turning now to FIG. 8C, at block 256 the trends in engine health that were identified using the calibrated model may not detect any symptoms of an anomaly. The engine may experience an abnormal operation mode during an estimated timeframe. Thus, it may be determined that the engine had an anomaly that was missed by the calibrated model (e.g., a false negative). Missing such an anomaly may increase maintenance costs and decrease time on-wing. As described above, the false positives may be used to further train the model or may indicate the model needs to be rebuilt or recalibrated.

The engine may also not experience any anomaly, as expected based on the trend in engine health. Thus, the engine is healthy as predicted (e.g., a true negative). The resulting maintenance costs and time on-wing may be the same. Such a true positive may be used to further train the model to improve accuracy of the calibrated model.

FIG. 9 illustrates exemplary flight data or continuous engine operating data (CEOD data). The fight data provides operating data for an engine during different defined flight phases over time.

FIG. 10 illustrates an exemplary method of certifying an engine by analysis using a calibrated model that has been calibrated via the methods described herein. In a typical application setting many (but not necessarily all) of the steps illustrated in FIG. 10 are carried out by a model calibration system, which in some approaches may include one or more components of the system 100. While the method is described with reference to an engine, it is contemplated that the method may also be applied to other real-world systems.

As shown at block 220, the model calibration system 100 may include or be in communication with an initial transient model for the engine. The transient model includes one or more tuning parameters.

At block 222, an engine test program may be defined for the engine. The engine test program may be any program designed to gather data on the engine, for example, for verification or validation that the engine is safe to operate or fit for purpose. In one approach, the test program may be designed to verify stall free performance around a flight envelope.

At block 224, ground test data for the engine is acquired. Ground testing may be performed off-wing, for example, in an engine test cell or other rig or facilities that are able to simulate flight conditions on the ground. Ground testing may include any tests to determine the functionality of engine systems in a manner that reproduces flight or running the engine to assess engine performance. For example, ground testing may include flight load simulation, material static and fatigue, structural dynamics, etc.

At block 226, the transient model is calibrated using the approaches described herein, for example, the method described with reference to FIGS. 3A and 3B. During calibration, the model calibration system 100 may determine values for one or more tuning parameters of the transient model. The ground test data is used to calibrate the transient model; in particular, the output of the transient model is matched to the ground test data. At block 228, the calibrated transient model that has been matched (or calibrated) to the ground test data is obtained. At block 230, the engine control software is updated based on simulations performed using the ground test calibrated transient model.

At block 232, the flight test data for the engine is acquired. Flight test data may be acquired on-wing during flight. Flight testing may include any tests to determine the functionality of engine systems in a manner that reproduces flight or running the engine to assess engine performance.

At block 234, the transient model is calibrated once more using the approaches described herein, for example, the method described with reference to FIGS. 3A and 3B. During calibration, the model calibration system 100 may determine updated values for one or more tuning parameters of the transient model.

At block 236, a calibrated transient model that has been matched (or calibrated) to the flight test data is obtained. At block 238, the engine control software is updated again based on simulations performed using the flight test calibrated transient model.

At block 240, the updated control software may be certified based on simulations run using the flight test calibrated transient model. In this manner, certification may be done by analysis rather than via ground testing or actual fight testing of the engine.

At block 242, there may be an update to engine hardware, for example, as part of a performance improvement program for the engine. At block 244, the calibrated transient model is then updated to reflect the update to engine hardware. In this manner, at block 246, the calibrated transient model may then be used again to run simulations to perform a second certification of the engine by analysis using the calibrated transient model.

Further aspects of the disclosure are provided by the subject matter of the following clauses:
A method comprising: receiving, from a testing device, test data for an operational parameter of an engine; receiving model data for the operational parameter from simulations performed via a model of the engine; compressing the test data and the model data to generate compressed test data and compressed model data; fusing the compressed test data with the compressed model data to generate fused data; performing parallel Bayesian inference simulations using the fused data to identify a tuning parameter value for the model; using the tuning parameter value in the model to obtain a tuned model; predicting a performance parameter for the engine using the tuned model; and causing a modification to the physical design or operation of the engine based on the performance parameter.

The method of any preceding clause, wherein the modification is an adjustment to a design parameter of the engine.

The method of any preceding clause, further comprising determining a design parameter for an engine component based on the performance parameter; and causing a manufacturing device to form the engine component according to the design parameter.

The method of any preceding clause, wherein the modification is an adjustment to a control setting of the engine.

The method of claim any preceding clause, further comprising determining an updated engine control setting for the engine based on the performance parameter; and causing an engine control system to adjust operation of the engine based on the updated engine control setting.

The method of claim any preceding clause, further comprising, determining compliance with an engine certification standard based on the perform8bance parameter by comparing the performance parameter against a defined performance standard.

The method of any preceding clause, wherein the parallel Bayesian inference simulations include parallel Markov Chain Monte Carlo (MCMC) simulations.

The method of any preceding clause, wherein the test data includes data on a plurality of operational parameters of the engine, wherein the model data includes predicted values for the plurality of operational parameters, the method including: performing parallel Bayesian inference simulations using the fused data to identify at least one value for the tuning parameter that aligns the model data and the test data.

The method of any preceding clause, using the tuning parameter in the model to generate calibrated predicted values for the operational parameter.

The method of any preceding clause, wherein the method further comprises: generating a discrepancy model that provides a difference between the calibrated predicted values and the observed values for the operational parameter.

The method of any preceding clause, wherein identifying a tuning parameter for the model includes generating a probability distribution for the tuning parameter, the probability distribution providing a probability that a particular value is a suitable candidate for the tuning parameter.

The method of any preceding clause, wherein compressing the test data includes at least one of principle component analysis (PCA), locally linear embedding (LLE), compression variational autoencoder (CVAE), or manifold learning.

The method of clause any preceding clause, wherein the test data and the model data are transient time-series data of the operational parameter of the engine.

The method of any preceding clause, wherein the testing device includes a sensor that determines observed values for the operational parameter of the engine.

The method of any preceding clause, further comprising: comparing the performance parameter for the engine against a defined performance standard for certification of the engine.

The method of any preceding clause, further comprising at least one of: causing an engine control system to adjust least one control parameter for the engine based on the engine control setting; or causing a device to manufacture the engine component according to the design parameter.

The method of any preceding clause, wherein the test data includes observed values for the operational parameter from the operational tests, and wherein the model data includes predicted values for the operational parameter from the simulations.

A system for calibrating a model, the system comprising: at least one processor; and a memory device, the memory device storing instructions that when executed by the at least one processor causes the at least one processor to perform operations, the at least one processor configured to: receive, via a testing device in communication with the at least one processor, test data for an operational parameter of an engine; receive model data for the operational parameter from simulations performed via a model of the engine; compress the test data and the model data to generate compressed test data and compressed model data; fuse the compressed test data with the compressed model data to generate fused data; perform parallel Bayesian inference simulations using the fused data to identify a tuning parameter value for the model; use the tuning parameter value in the model to obtain a tuned model; predict a performance parameter of the engine using the tuned model; and cause a modification to the physical design or operation of the engine based on the performance parameter.

The system of any preceding clause, wherein the at least one processor is further configured to cause an engine control system to adjust at least one control parameter for the engine based on the engine control setting or to cause a device to manufacture the engine component according to the design parameter based on the performance parameter.

The system of any preceding clause, wherein the parallel Bayesian inference simulations include parallel Markov Chain Monte Carlo (MCMC) simulations.

The system of any preceding clause, wherein the at least one processor is further configured to use the tuning parameter in the model to generate calibrated predicted values for the operational parameter.

The system of any preceding clause, wherein the at least one processor is further configured to: generate a discrepancy model that provides a difference between the calibrated predicted values and the observed values for the operational parameter.

The system of any preceding clause, wherein identifying a tuning parameter for the model includes generating a probability distribution for the tuning parameter, the probability distribution providing a probability that a particular value is a suitable candidate for the tuning parameter.

The system of any preceding clause, wherein the test data and the model data are transient time-series data of the operational parameter of the engine.

The system of any preceding clause, further comprising a testing device in communication with the at least one processor, wherein the test data is acquired by the testing device.

The system of any preceding clause, wherein the at least one processor is further configured to do at least one of: cause an engine control system to adjust least one control parameter for the engine based on the engine control setting; or cause a device to manufacture the engine component according to the design parameter.

The system of any preceding clause, wherein the at least one processor is further configured to compare the performance parameter for the engine against a defined performance standard for certification of the engine.

A method comprising: receiving, from a testing device, test data for an operational parameter of an engine from operational tests of the engine, the test data including observed values for the operational parameter from the operational tests; receiving model data for the operational parameter from simulations performed via a model of the engine, the model data including predicted values for the operational parameter from the simulations; compressing the test data and the model data to generate compressed test data and compressed model data; fusing the compressed test data with the compressed model data to generate fused data; generating a first distribution for a first tuning parameter of the model by performing parallel Bayesian inference simulations using the fused data, the first distribution providing a probability that a particular value is a suitable candidate for the first tuning parameter; generating a second distribution for a second tuning parameter of the model by performing parallel Bayesian inference simulations using the fused data, the second distribution providing a probability that a particular value is a suitable candidate for the second tuning parameter; generating a tuned model by using the value for the first tuning parameter and the value for the second tuning parameter in the model; and causing a modification to the physical design or operation of the engine based on the performance parameter

The method of any preceding clause, further comprising determining at least one of a design parameter for an engine component, an engine control setting, or compliance with an engine certification standard using the tuned model.

The method of any preceding clause, further comprising at least one of: causing an engine control system to adjust least one control parameter for the engine based on the engine control setting; or causing a device to manufacture the engine component according to the design parameter.

The method of any preceding clause, further comprising: selecting a value for the first tuning parameter based on the first distribution; and selecting a value for the second tuning parameter based on the second distribution.

The method of any preceding clause, further comprising: generating a plurality of possible values for the first tuning parameter based on the first distribution; generating a plurality of possible values for the second tuning parameter based on the second distribution; generating a plurality of combinations of values for the first tuning parameter and the second tuning parameter based on the possible values; determining a likelihood that each of the plurality of combinations aligns the model data with the test data; and selecting a particular combination of values that results in the highest likelihood aligning the model data with the test data. The method of any preceding clause, the test data includes data on a plurality of operational parameters of the engine, wherein the model data includes predicted values for the plurality of operational parameters, the method including: selecting the particular combination of values to align the plurality of operational parameters of the model data and the test data.

A method comprising: receiving test data associated with a system; receiving model data for the operational parameter from simulations performed via a model; compressing the test data and the model data to generate compressed test data and compressed model data; fusing the compressed test data with the compressed model data to generate fused data; and performing parallel Bayesian inference simulations using the fused data to identify at least one value for a tuning parameter of the model.

The method of any preceding clause, wherein the system is a real-world system, and wherein the test data is acquired via a testing device associated with the real-world system.

A system for calibrating a model, the system comprising: at least one processor; and a memory device, the memory device storing instructions that when executed by the at least one processor causes the at least one processor to perform operations, the at least one processor configured to: receive, via a testing device in communication with the at least one processor, test data for an operational parameter of a system; receive model data from simulations performed via a model of the system; compress the test data and the model data to generate compressed test data and compressed model data; fuse the compressed test data with the compressed model data to generate fused data; and perform parallel Bayesian inference simulations using the fused data to identify at least one value for a tuning parameter of the model.

The system of any preceding clause, wherein the system is a real-world system, and wherein the test data is acquired via a testing device associated with the real-world system.

A method comprising: receiving, from a testing device, test data a system; receiving model data from simulations performed via a model of the system, the model data including predicted values for the operational parameter from the simulations; compressing the test data and the model data to generate compressed test data and compressed model data; fusing the compressed test data with the compressed model data to generate fused data; generating a first distribution for a first tuning parameter of the model by performing parallel Bayesian inference simulations using the fused data, the first distribution providing a probability that a particular value is a suitable candidate for the first tuning parameter; and generating a second distribution for a second tuning parameter of the model by performing parallel Bayesian inference simulations using the fused data, the second distribution providing a probability that a particular value is a suitable candidate for the second tuning parameter.

The method of any preceding clause, wherein the system is a real-world system, and wherein the test data is acquired via a testing device associated with the real-world system.

A method comprising: receiving, from a testing device, test data for an operational parameter of a real-world system from tests of the real-world system, the test data including observed values for the operational parameter from the operational tests; receiving model data for the operational parameter from simulations performed via a model of the real-world system, the model data including predicted values for the operational parameter from the simulations; compressing the test data and the model data to generate compressed test data and compressed model data; fusing the compressed test data with the compressed model data to generate fused data; performing parallel Bayesian inference simulations using the fused data to identify a tuning parameter value for the model; using the tuning parameter value in the model to obtain a tuned model; and determining at least one a performance parameter for the real-world system, a design parameter for a component for the real-world system, or a control setting for the real-world system using the tuned model.

The method of any preceding clause, further comprising: causing an adjustment of at least one control parameter for the real-world system based on the control setting.

The method of any preceding clause, further comprising: causing a device to manufacture the engine component according to the design parameter.

A method comprising: receiving, from a testing device, test data for an operational parameter of a real-world system from operational tests of the real-world system, the test data including observed values for the operational parameter from the operational tests; receiving model data for the operational parameter from simulations performed via a model of the real-world system, the model data including predicted values for the operational parameter from the simulations; compressing the test data and the model data to generate compressed test data and compressed model data; fusing the compressed test data with the compressed model data to generate fused data; generating a first distribution for a first tuning parameter of the model by performing parallel Bayesian inference simulations using the fused data, the first distribution providing a probability that a particular value is a suitable candidate for the first tuning parameter, and selecting a value for the first tuning parameter based on the first distribution; generating a second distribution for a second tuning parameter of the model by performing parallel Bayesian inference simulations using the fused data, the second distribution providing a probability that a particular value is a suitable candidate for the second tuning parameter, and selecting a value for the second tuning parameter based on the second distribution; generating a tuned model by using the value for the first tuning parameter and the value for the second tuning parameter in the model; and determining at least one of a performance parameter for the real-world system, a design parameter for a component of the real-world system, or a control setting for the real-world system using the tuned model.

The method of any preceding clause, further comprising: causing an adjustment of least one control parameter for the real-world system based on the control setting.

The method of any preceding clause, further comprising: causing a device to manufacture the component according to the design parameter.

A system for calibrating a model of a real-world system, the system comprising: at least one processor; and a memory device, the memory device storing instructions that when executed by the at least one processor causes the at least one processor to perform operations, the at least one processor configured to: receive, via a testing device in communication with the at least one processor, test data for an operational parameter of the real-world system from operational tests of the real-world system, the test data including observed values for the operational parameter from the operational tests; receive model data for the operational parameter from simulations performed via the model, the model data including predicted values for the operational parameter from the simulations; compress the test data and the model data to generate compressed test data and compressed model data; fuse the compressed test data with the compressed model data to generate fused data; and perform parallel Bayesian inference simulations using the fused data to identify a tuning parameter value for the model; use the tuning parameter value in the model to obtain a tuned model; and predict a performance parameter of the real-world system using the tuned model.

The system of any preceding clause, wherein the at least one processor is further configured to cause an adjustment of at least one control parameter for the real-world system based on the performance parameter.

The system of any preceding clause, wherein the at least one processor is further configured to determine at least one design parameter for a component based on the performance parameter, and to cause a device to manufacture the engine component according to the design parameter.

## Claims

1. A method comprising:
receiving, from a testing device (106), test data for an operational parameter of an engine;
receiving model data for the operational parameter from simulations performed via a model (112, 144) of the engine;
compressing the test data and the model data to generate compressed test data and compressed model data;
fusing the compressed test data with the compressed model data to generate fused data (128);
performing parallel Bayesian inference simulations using the fused data to identify a tuning parameter value for the model (112, 144);
using the tuning parameter value in the model (112, 144) to obtain a tuned model (112, 144);
predicting a performance parameter for the engine using the tuned model 112, 144); and
causing a modification to the physical design or operation of the engine based on the performance parameter.

2. The method of claim 1, wherein the modification is an adjustment to a design parameter of the engine.

3. The method of claim 2, further comprising determining a design parameter for an engine component based on the performance parameter; and causing a manufacturing device to form the engine component according to the design parameter.

4. The method of claim 1, wherein the modification is an adjustment to a control setting of the engine.

5. The method of claim 4, further comprising determining an updated engine control setting for the engine based on the performance parameter; and causing an engine control system to adjust operation of the engine based on the updated engine control setting.

6. The method of any preceding claim, further comprising, determining compliance with an engine certification standard based on the performance parameter by comparing the performance parameter against a defined performance standard.

7. The method of any preceding claim, wherein the test data includes data on a plurality of operational parameters of the engine, wherein the model data includes predicted values for the plurality of operational parameters, the method including:
performing parallel Bayesian inference simulations using the fused data to identify the tuning parameter value that aligns the model data and the test data.

8. The method of any preceding claim, wherein the method further comprises:
using the tuned model (112, 144) to generate calibrated predicted values for the operational parameter; and
generating a discrepancy model (146) that provides a difference between the calibrated predicted values and the observed values for the operational parameter.

9. The method of any preceding claim, wherein identifying a tuning parameter for the model (112, 144) includes generating a probability distribution (148, 186, 188, 190) for the tuning parameter, the probability distribution (148, 186, 188, 190) providing a probability that a particular value is a suitable candidate for the tuning parameter.

10. The method of any preceding claim, wherein compressing the test data includes at least one of principle component analysis (PCA), locally linear embedding (LLE), compression variational autoencoder (CVAE), or manifold learning.

11. The method of any preceding claim, wherein the test data and the model data are transient time-series data of the operational parameter of the engine.

12. The method of any preceding claim, wherein the testing device (106) includes a sensor that determines observed values for the operational parameter of the engine.

13. A system for calibrating a model (112, 144), the system comprising:
at least one processor; and
a memory device, the memory device storing instructions (130) that when executed by the at least one processor causes the at least one processor to perform operations, the at least one processor configured to:
receive, via a testing device (106) in communication with the at least one processor, test data for an operational parameter of an engine;
receive model data for the operational parameter from simulations performed via a model (112, 144) of the engine;
compress the test data and the model data to generate compressed test data and compressed model data;
fuse the compressed test data with the compressed model data to generate fused data;
perform parallel Bayesian inference simulations using the fused data to identify a tuning parameter value for the model (112, 144);
use the tuning parameter value in the model (112, 144) to obtain a tuned model (112, 144);
predict a performance parameter of the engine using the tuned model (112, 144); and
cause a modification to the physical design or operation of the engine based on the performance parameter.

14. The system of claim 13, wherein the at least one processor is further configured determine at least one of a design parameter for an engine component, an engine control setting, or compliance with an engine certification standard based on the performance parameter; and to cause an engine control system (136) to adjust at least one control parameter for the engine based on the engine control setting or to cause a device to manufacture the engine component according to the design parameter based on the performance parameter.

15. The system of any of claims 13 or 14, wherein the at least one processor is further configured to:
use the tuned model (112, 144) to generate calibrated predicted values for the operational parameter; and
generate a discrepancy model (146) that provides a difference between the calibrated predicted values and the observed values for the operational parameter.
